# EUROPEAN PATENT APPLICATION

(11) **EP 4 475 387 A1**
(43) Date of publication of application: **11.12.2024**
(21) Application number: 22923940.5
(22) Date of filing: 31.01.2022
(51) Int. Cl.: H02J 13/00, F24H 15/40, F24H 15/212, H02J 3/00, H02J 3/14

(54) **HEAT STORAGE SYSTEM CONTROL DEVICE, HEAT STORAGE SYSTEM, HEAT STORAGE SYSTEM CONTROL METHOD, CONTROL PROGRAM, AND RECORDING MEDIUM**

(71) Applicant: MITSUBISHI ELECTRIC CORPORATION, Chiyoda-ku Tokyo 100-8310 (JP)
(72) Inventor: KADOWAKI Kimitaka, Tokyo 100-8310 (JP); NAKAGAWA Hiroyuki, Tokyo 100-8310 (JP); ITO Takuya, Tokyo 100-8310 (JP); TANIGAWA Masato, Tokyo 100-8310 (JP)
(74) Representative: Witte, Weller & Partner Patentanwälte mbB
(86) International application number: PCT/JP2022/003614
(87) International publication number: WO 2023/145077

(57) **Abstract**

Objects of the present disclosure are to provide a heat storage system control device, a heat storage system, a heat storage system control method, a control program, and a recording medium for performing a power supply and demand adjustment for a heat storage device according to an entire power supply and demand by changing an operation schedule of the heat storage device based on power supply and demand information from a power control instruction device that manages power supply and demand for a plurality of consumers. The heat storage system control device of the present disclosure includes a receiving unit configured to acquire power supply and demand information from a power control instruction device, an operation schedule determination unit configured to determine an operation schedule of a heat storage device based on the power supply and demand information, a transmission unit configured to transmit the operation schedule determined by the operation schedule determination unit to the power control instruction device, and a heat storage device control unit configured to control an operation of the heat storage device based on the operation schedule determined by the operation schedule determination unit.

## Description

### Technical Field

The present disclosure relates to a heat storage system that stores heat generated by a water heater or a similar device by using electricity, a control device for controlling the heat storage system, a method for controlling the heat storage system, a control program, and a recording medium.

### Background Art

Recently, a system, such as a virtual power plant (VPP), that maximizes the utilization efficiency of natural energies has been discussed. For example, the VPP is a system that provides a function equivalent to a power plant when owners or third parties of an energy resource on the consumer side, a power generation facility directly connected to a power system, and a power storage facility control the energy resources. In addition, especially for utilization of electric power, a demand contract (demand rate system) is known as a system for reducing a maximum power demand of each consumer.

Furthermore, a water heater is operated mainly during the night when an electricity rate is relatively low, to store hot water in the hot water tank. For this reason, when water heaters of a plurality of consumers in an area are operated intensively in a certain time period at night, a peak value of the aggregate power consumption increases, and thus a tight power supply-demand situation may occur. To prevent this situation, a technique is known in which a plurality of consumers are divided into several groups according to the capacity of the hot water tank of the water heater of each consumer and water heaters are controlled so that operations of the water heaters of each group are started at a time shifted from the operation start times of other groups. However, because the water heater of each consumer does not necessarily heat water for the full capacity of the hot water tank in the same way every day, there are cases where the peak of the aggregate power consumption cannot be controlled appropriately.

As a technology that solves the abovementioned problem, a management device is known (see, for example, Patent Literature 1) which determines an operation timing for the water heater of each consumer to increase the possibility of reducing the peak value of the aggregate power consumption of the water heaters of a plurality of consumers. The management device includes an acquisition unit configured to acquire water heater information indicating an operation record of a water heater of each of the plurality of consumers, a classification unit configured to identify an index value related to a length of an operation time of the water heater of each of the plurality of consumers based on the water heater information and classify the plurality of consumers into a plurality of groups according to the index value, a determination unit configured to determine, for each of the plurality of groups, an operation timing of the water heaters in the group, and an output unit configured to output timing information indicating the operation timing determined by the determination unit.

### Citation List

### Patent Literature

Patent Literature 1: Japanese Patent No. 6739040

### Summary of Invention

### Technical Problem

According to the management device disclosed in Patent Literature 1, the plurality of consumers are classified into a plurality of groups according to the length of the operation time of the water heater of each of the consumers. Because the operation time of each water heater affects power consumption, the case of Patent Literature 1 can increase the possibility of reducing the peak value of the aggregate power consumption of the water heaters of the plurality of consumers compared with a case where classification is performed without relation to an operation time. However, although the management device disclosed in Patent Literature 1 is effective as means for avoiding a situation where a power consumption of the consumers increases, a way to respond to a case where a power of the supply side increases is not considered. In addition, according to the management device disclosed in Patent Literature 1, the possibility of reducing the peak value of the aggregate power consumption of the plurality of consumers is increased. However, because the management device cannot know supply and demand information of all consumers in advance, except the supply and demand information of the plurality of consumers that the management device manages, there is a problem that a result of supply and demand adjustment on the plurality of consumers that the management device manages does not match with the power supply and demand of all consumers.

The present disclosure has been made to solve the above problems and has objects to provide a heat storage system control device, a heat storage system, a heat storage system control method, a control program, and a recording medium for adjusting power supply and demand for a heat storage device according to the overall power supply and demand by changing an operation schedule of the heat storage device based on power supply and demand information from a power control instruction device that manages power supply and demand for a plurality of consumers.

### Solution to Problem

A heat storage system control device according to one embodiment of the present disclosure includes a receiving unit configured to acquire power supply and demand information from a power control instruction device, an operation schedule determination unit configured to determine an operation schedule of a heat storage device based on the power supply and demand information, a transmission unit configured to transmit the operation schedule determined by the operation schedule determination unit to the power control instruction device, and a heat storage device control unit configured to control an operation of the heat storage device based on the operation schedule determined by the operation schedule determination unit.

A heat storage system according to another embodiment of the present disclosure is configured to control a heat storage device based on power supply and demand information. The heat storage system includes a generation unit configured to generate the power supply and demand information, an operation schedule determination unit configured to determine an operation schedule of the heat storage device based on the power supply and demand information, and a heat storage device control unit configured to control an operation of the heat storage device based on the operation schedule determined by the operation schedule determination unit.

In addition, a heat storage system control method according to still another embodiment of the present disclosure is a method for controlling an operation of a heat storage device based on power supply and demand information. The method includes determining an operation schedule of the heat storage device based on the power supply and demand information, and controlling the heat storage device based on the operation schedule.

Further, a control program according to yet another embodiment of the present disclosure is a program for causing a computer to function as a heat storage system control device configured to control an operation of a heat storage device. The control program includes a program instruction for causing a computer to function as a receiving unit configured to receive power supply and demand information from a power control instruction device, as a operation schedule determination unit configured to determine an operation schedule of the heat storage device based on the power supply and demand information, and as a transmission unit configured to transmit the operation schedule to the power control instruction device and the heat storage device.

Furthermore, a recording medium according to a further embodiment of the present disclosure is a computer readable recording medium storing a control program. Advantageous Effects of Invention

According to an embodiment of the present disclosure, because the operation schedule of a heat storage device is changed based on the power supply and demand information from the power control instruction device, the power to be used by the operation of the heat storage device is adjusted to match the overall power supply and demand.

### Brief Description of Drawings

[Fig. 1] Fig. 1 is a hardware configuration diagram illustrating an example of the configuration of a heat storage system 100 according to Embodiment 1.
[Fig. 2] Fig. 2 is a functional block diagram illustrating an example of the configuration of the heat storage system 100 according to Embodiment 1.
[Fig. 3] Fig. 3 is a flowchart regarding control of a heat storage device 20 and transmission of an operation schedule to a power control instruction device 30 by a heat storage system control device 10 in the heat storage system 100 according to Embodiment 1.
[Fig. 4] Fig. 4 is an example of an operation schedule of the heat storage device 20 to be processed by the heat storage system control device 10 and power supply and demand information acquired from the power control instruction device 30.
[Fig. 5] Fig. 5 is a functional block diagram of the heat storage system 100 according to Embodiment 2.
[Fig. 6] Fig. 6 is a flowchart regarding control of a heat storage device 20 and transmission of an operation schedule to a power control instruction device 30 by the heat storage system 100 according to Embodiment 2.
[Fig. 7] Fig. 7 is a hardware configuration diagram illustrating an example of the configuration of the heat storage system 100 according to Embodiment 3.
[Fig. 8] Fig. 8 is a functional block diagram illustrating an example of the configuration of the heat storage system 100 according to Embodiment 3.
[Fig. 9] Fig. 9 is a functional block diagram illustrating an example of the configuration of the heat storage system 100 according to Embodiment 3.
[Fig. 10] Fig. 10 is an example of change in an operation schedule of the heat storage device 20 in the heat storage system 100 according to Embodiment 1. Description of Embodiments

Hereinafter, a heat storage system control device, a heat storage system, a heat storage system control method, a control program, and a recording medium according to the embodiments of the present disclosure will be described with reference to the drawings. In the following drawings, elements denoted by the same reference symbols are the same or corresponding elements, and this applies throughout this description. In addition, the modes of elements and the steps (processes) described herein are merely illustrative, and the modes of elements and the steps are not limited to those described herein. Furthermore, the elements or steps (processes) of one embodiment are not limited only to the combination of the embodiment. An element described in one embodiment can be applied to another embodiment.

### Embodiment 1

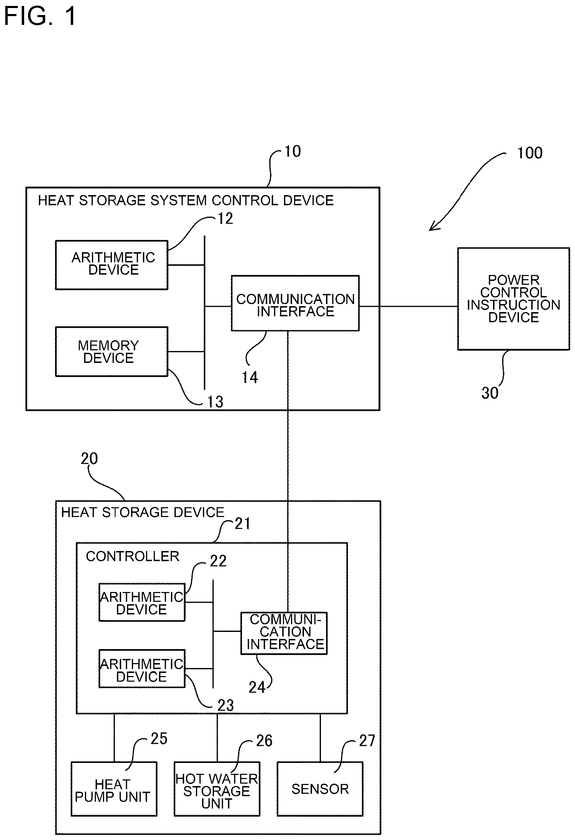

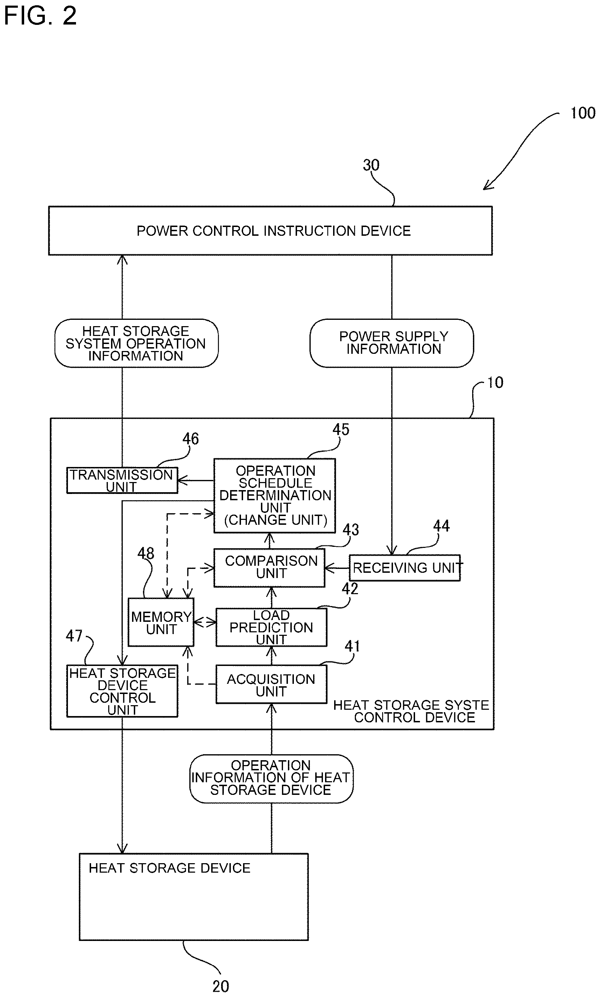

Fig. 1 is a hardware configuration diagram illustrating an example of the configuration of a heat storage system 100 according to Embodiment 1. Fig. 2 is a functional block diagram illustrating an example of the configuration of the heat storage system 100 according to Embodiment 1. In the heat storage system according to Embodiment 1, a heat storage system control device 10 is configured to generate or change an operation schedule for a heat storage device 20 based on power supply and demand information, which is received from a power control instruction device 30 provided outside the heat storage system control device 10. Furthermore, the heat storage system control device 10 is configured to transmit, to the power control instruction device 30, information on demand for power by the heat storage device 20 based on the operation schedule of the heat storage device 20.

### (Heat Storage System Control Device 10)

The heat storage system control device 10 is provided integrally with or independently from the heat storage device 20. The heat storage system control device 10 is connected to the power control instruction device 30 provided outside the heat storage system control device 10 and to the heat storage device 20 so that the heat storage system control device 10 can communicate with the power control instruction device 30 and the heat storage device 20. The heat storage system control device 10, the power control instruction device 30, and the heat storage device 20 are capable of transmitting and receiving information via a communication channel such as a wireless or wired link. Examples of the communication channel may include a wide area network, such as the Internet or a telephone line. In Embodiment 1, as shown as an example in Fig. 1, a case is described where the heat storage system control device 10 is provided as an independent device. However, the heat storage system control device 10 may be, for example, provided on a server, connected to a network as an independent device, or provided integrally with the heat storage device 20 or the power control instruction device 30 connected to a network. Furthermore, functions to be implemented by the heat storage system 100 may be dispersedly provided in devices connected to a network, that is, a server, the heat storage device 20, and the power control instruction device 30, and each of the functions of the heat storage system control device 10 may be implemented through transmission and reception of necessary information among the devices.

The heat storage system control device 10 is formed as, for example, a microcomputer, and includes an arithmetic device 12, a memory device 13, and a communication interface (I/F) 14. Functions of the heat storage system control device 10, that is, the functional blocks shown in Fig. 2 are implemented by using the arithmetic device 12, the memory device 13, and the communication interface 14. The communication interface 14 is connected to the heat storage device 20 and to the power control instruction device 30 provided outside the heat storage system control device 10, and is configured to transmit and receive information to and from the heat storage device 20 and the power control instruction device 30.

The memory device 13 is a read-only memory (ROM) in which a program and data are stored in advance, a random access memory (RAM) that temporarily stores data when a program is executed, or a similar device. A flash memory, an erasable and programmable ROM (EPROM), an electrically erasable and programmable ROM (EEPROM), or other types of non-volatile or volatile semiconductor memory may be used as the memory device 13. In addition, a removable recording medium such as, for example, a magnetic disk, a flexible disk, an optical disc, a compact disc (CD), a mini disc (MD), or a digital versatile disc (DVD) may be used as the memory device 13. The memory device 13 is configured to store information from the heat storage device 20 and the power control instruction device 30, and information processed by the arithmetic device 12.

The arithmetic device 12 is configured to perform various kinds of processing to execute functions of the heat storage system control device 10. The arithmetic device 12 is configured to, for example, compare a load prediction result of the heat storage device 20 stored in the memory device 13 with power supply and demand information from the power control instruction device 30, and perform processing for changing the operation schedule of the heat storage device 20. That is, the arithmetic device 12 is configured to perform processing of each functional block shown in Fig. 2 in cooperation with the memory device 13.

### (Heat Storage Device 20)

The heat storage device 20 is, for example, a water heater installed at each home, and includes a heat pump unit 25, a hot water storage unit 26 configured to store hot water heated by the heat pump unit 25, a sensor 27, and a controller 21.

The heat pump unit 25 includes, for example, an air heat exchanger, a compressor, a water heat exchanger, and a pressure reducing device. The heat pump unit 25 is configured to heat water by using the water heat exchanger and send the water to the hot water storage unit 26. The hot water storage unit 26 includes a tank, a pipe, an on-off valve, a heat insulation material, and others. Hot water in the hot water storage unit 26 may be circulated, as needed, between the hot water storage unit 26 and the heat pump unit 25 to keep the water hot.

The sensor 27 may include a plurality of sensors, such as, for example, a sensor detecting the temperature of hot water in the hot water storage unit 26, a flow rate sensor detecting the amount of hot water flowing out to the outside from the heat storage device 20, a sensor measuring the power consumption of the compressor provided in the heat pump unit 25, and other sensors.

The controller 21 is configured to control an operation of the heat storage device 20, and has a hardware configuration similar to that of the heat storage system control device 10. The controller 21 is formed as, for example, a microcomputer, and includes an arithmetic device 22, a memory device 23, and a communication interface (I/F) 24. Functions of the controller 21 are executed by using the arithmetic device 22, the memory device 23, and the communication interface 24. Note that, when the heat storage system control device 10 is built into the heat storage device 20, the controller 21 in the heat storage device 20 may be omitted as hardware and the heat storage system control device 10 may serve the function of the controller 21.

### (Power Control Instruction Device 30)

The power control instruction device 30 is a device that manages, for example, power usage and power supply in an area. The power control instruction device 30 has information on power usage and power supply of an area, and includes a generation unit configured to generate power supply and demand information, which is information on the power usage and power supply of the area, for consumers in the area including the heat storage system control device. The heat storage system control device 10 can acquire, as needed, power supply and demand information including information on power usage, power supply, and power supply schedule of the entire area that the heat storage device 20 belongs to, from the power control instruction device 30. In Embodiment 1, as shown as an example in Fig. 1, a case is described where the power control instruction device 30 is provided as an independent device. However, the power control instruction device 30 may be, for example, provided on a server, connected to a network as an independent device, or provided in any one of the devices connected to a network. Furthermore, functions to be implemented by the power control instruction device 30 may be dispersedly provided in devices connected to a network, that is, a server and other devices, and each of the functions of the power control instruction device 30 may be implemented through transmission and reception of necessary information among the devices.

### (Operation of Heat Storage System 100)

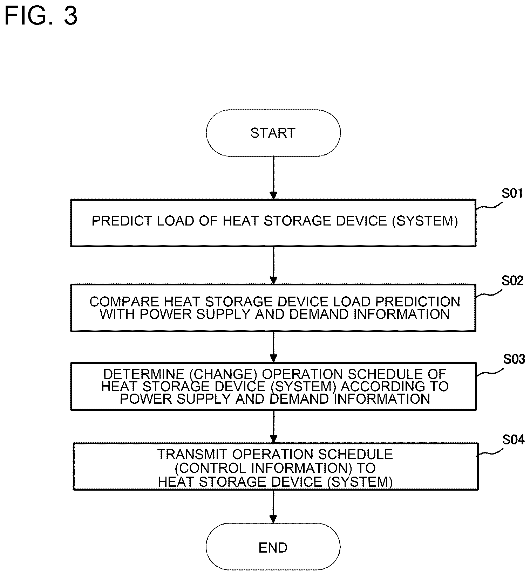

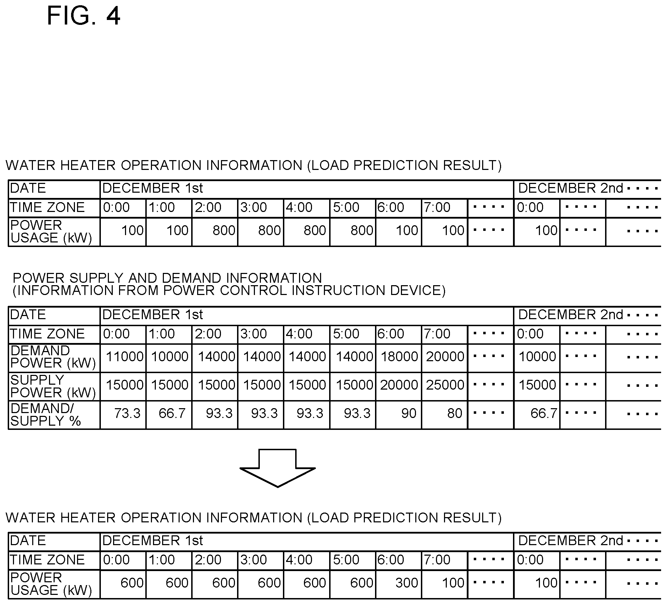

Fig. 3 is a flowchart regarding control of the heat storage device 20 and transmission of an operation schedule to the power control instruction device 30 by the heat storage system control device 10 in the heat storage system 100 according to Embodiment 1. Fig. 4 is an example of an operation schedule of the heat storage device 20 to be processed by the heat storage system control device 10 and power supply and demand information acquired from the power control instruction device 30. In Fig. 4, the table illustrated at the top is an operation schedule of the heat storage device 20. The second table from the top illustrated in Fig. 4 is power supply and demand information acquired from the power control instruction device 30, showing information of the area that the heat storage device 20 belongs to.

In step S01 shown in Fig. 3, the heat storage system control device 10 performs a load prediction for the heat storage device 20. This step S01 is called a load prediction step. The load prediction is performed based on operation information obtained from the heat storage device 20. An acquisition unit 41 of the heat storage system control device 10 receives operation information of the heat storage device 20 from the heat storage device 20, and a load prediction unit 42 predicts a future operation schedule. The predicted operation schedule is also referred to simply as a load prediction. Note that, the operation information of the heat storage device 20 may be operation history information of the heat storage device 20 that has been already acquired by the heat storage system control device 10 and is stored in a memory unit 48. Because, for example, the heat storage device 20 is a water heater, the power usage will increase in a time zone in which water is heated and stored and in a time zone in which usage of hot water is increased. The heat storage system control device 10 is configured to predict an operation schedule based on the operation history information of the heat storage device 20 and operation setting information set in the heat storage device 20 by a user. The operation schedule is represented as, for example, power usage amounts of the heat storage device 20 in the respective time zones, as illustrated at the top of Fig. 4. In addition, the operation schedule may be represented as a graph indicating a relationship between a time and a power usage amount with the horizontal axis representing the time and the vertical axis representing the power usage amount.

The abovementioned operation schedule prediction may be performed by using a learning model learned by using training data having, as input data, outdoor temperature, humidity, weather, a history of the hot water usage amounts in every time zone of every day of the week, and the type of business in which the heat storage device 20 is used, and having, as output data, history data of the power usage amounts in every time zone of the heat storage device 20. That is, an outdoor temperature, a humidity, a weather, a history of the hot water usage amount in a time zone of a day of the week, and the type of business in which the heat storage device 20 is used are input to this learning model to predict a power usage of the heat storage device 20 for the time zone.

Next, in step S02, the heat storage system control device 10 compares the operation schedule of the heat storage device 20 obtained in step S01 with power supply and demand information obtained from the power control instruction device 30. This step S02 is called a comparison step. The power supply and demand information obtained from the power control instruction device 30 is, for example, the second table from the top shown in Fig. 4, and is data on a predicted value of power usage and a scheduled value of power supply for each time zone for the entire area that the power control instruction device 30 manages. In addition, the power supply and demand information obtained from the power control instruction device 30 may be information only on whether or not power supply is tight for each time zone or may be information on electricity rates for every time zone. When the power supply and demand information is electricity rates for every time zone, a high electricity rate is set for a time zone in which power supply is tight and a low electricity rate is set for a time zone in which power supply is surplus.

In the heat storage system control device 10, a comparison unit 43 compares the operation schedule of the heat storage device 20 with the power supply and demand information. The comparison unit 43 may be configured to, for example, detect a time zone in which power supply is tight in the power supply and demand information by using a predetermined condition or rank degrees of power supply tightness. At this time, a time zone in which power supply is determined to be tight is called a tight time zone. Furthermore, the time zones in the power supply and demand information may be classified into a high tightness time zone in which power supply is particularly tight in the power supply and demand information and an off-peak time zone in which power demand is low.

In addition, the comparison unit 43 may be configured to rank power usage amounts of the respective time zones in the operation schedule of the heat storage device 20. For example, a time zone is detected that corresponds to a condition that the rank of the degree of power supply tightness is higher than or equal to a threshold and the rank of the power usage amount of the heat storage device 20 is higher than or equal to a threshold. For example, in a high tightness time zone in which power supply is tight in the power supply and demand information from the power control instruction device 30, the operation of the heat storage device 20 is to be stopped, and, in an off-peak time zone in which power supply is surplus, the operation of the heat storage device 20 is to be changed to a forced operation. When the operation schedule of the heat storage device 20 is changed, the necessity of the change is determined basically based on whether or not an amount of heat stored by the heat storage device 20 is enough for future use. Note that, processing performed by the comparison unit 43 is not necessarily limited to the processing of comparing an operation schedule with power supply and demand information, and may be, for example, processing of comparing a predetermined condition with an operation schedule. In addition, the processing performed by the comparison unit 43 may be processing of determining whether or not power supply and demand information corresponds to a predetermined condition.

Next, in step S03, the heat storage system control device 10 determines or changes the operation schedule of the heat storage device 20 based on the information obtained by the comparison unit 43. This step S03 is called an operation schedule determination step. For example, an operation schedule determination unit 45 changes the operation schedule illustrated in the top table of Fig. 4 into the operation schedule illustrated in the bottom table of Fig. 4. Note that, the operation schedule determination unit 45 is also referred to as an operation schedule change unit.

The operation schedule determination unit 45 is configured to change the power usage amount of the time zone that is detected by the comparison unit 43 or that corresponds to the condition while the sum of the usage power amounts of the heat storage device 20 in a predetermined period (e.g., a day) is kept substantially the same before and after the change. The operation schedule determination unit 45 is configured to output the changed operation schedule as, for example, data of power usage amounts in the respective time zones shown in the bottom table of Fig. 4. The information output from the operation schedule determination unit 45 is sent to a transmission unit 46 and a heat storage device control unit 47.

Furthermore, when the operation schedule is changed, the operation schedule determination unit 45 may refer to a table of electricity rates by time zone so that the charge for the power consumed by the heat storage device 20 in a predetermined period (e.g., a day) is reduced. In this case, the electricity rate table is stored in the memory unit 48 in advance. The electricity rate table can be obtained from the power control instruction device 30.

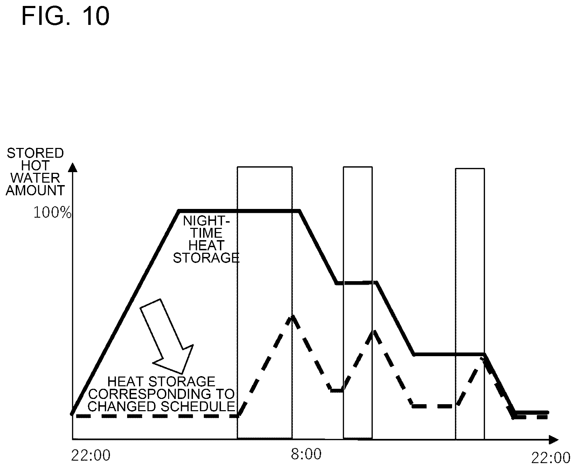

Fig. 10 is an example of change in the operation schedule of the heat storage device 20 in the heat storage system 100 according to Embodiment 1. The electricity rate, as day time rate, for the time zone from 7 am to 11 pm is set to 32.74 yen per kWh, which is a unit of electric energy, and the electricity rate, as night time rate, for the time zone from 11 pm to 7 am is set to 21.16 yen per kWh. With such an electricity rate plan, heat storage is usually performed in the night time zone starting at 11 pm, as shown by a solid line in Fig. 10. However, in the heat storage system 100 according to Embodiment 1, heat storage is performed not only at night but also in day time zone, as shown by a broken line in Fig. 10. By setting the electricity rate to a low rate for an off-peak time zone in which power supply is surplus, a power supply side can encourage the heat storage device 20 to perform a heat storage operation in the off-peak time zone. That is, by providing electricity rates for each time zone as power supply and demand information to the heat storage system control device 10 by the power control instruction device 30, the heat storage system control device 10 changes the operation schedule so that a heat storage operation is proactively performed also in the off-peak time zone. The heat storage system control device 10 can set an operation schedule that can contribute to adjustment of the entire power supply and demand while keeping a heat storage amount enough for future use and keeping the electricity charge low.

Next, in step S04, the heat storage system control device 10 transmits information based on the changed operation schedule to the power control instruction device 30 and the heat storage device 20. This step S04 is called a transmission step. The transmission unit 46 transmits the changed operation schedule to the power control instruction device 30. In addition, the heat storage device control unit 47 transmits, as control information, the changed operation schedule and power consumption amounts to the heat storage device 20. The control information transmitted to the heat storage device 20 is processed by the controller 21 of the heat storage device 20, and the operation of the heat storage device 20 is controlled.

Note that, exchanging of information between the power control instruction device 30 and the heat storage system control device 10, such as acquisition of power supply and demand information from the power control instruction device 30 or transmission of information to the power control instruction device 30 by the transmission unit 46, is performed periodically at morning, noon, and night, for example, or at an interval of at least 30 minutes. For example, in exchanging of information at morning, an operation schedule from morning to evening of the heat storage device 20 is determined. In exchanging of information at noon, an operation schedule from evening to midnight is determined. In exchanging of information at night, an operation schedule from midnight to morning is determined. When information is exchanged every 30 minutes or so, the amount of stored hot water is checked to detect an unexpectedly large excess or shortage, and the necessity of change in the operation schedule is determined.

### (Advantageous Effects of Embodiment 1)

As described above, in the heat storage system 100 according to Embodiment 1, because the heat storage system control device 10 is configured to change the operation schedule of the heat storage device 20 based on the power supply and demand information obtained from the power control instruction device 30, the heat storage device 20 can be controlled according to the power supply and demand situation of all devices that the power control instruction device 30 manages. In addition, by comparing the operation schedule of the heat storage system control device 10 obtained from a load prediction with the power supply and demand information obtained from the power control instruction device 30, heat storage (e.g., water heating) of the heat storage device 20 in a time zone in which power supply is tight can be avoid. Specifically, the heat storage system control device 10 controls the heat storage device 20 to perform a heat storage operation in a time zone, obtained in advance, in which power supply is sufficient. With this technique, a user can avoid shortage of hot water in the hot water storage unit 26 even in a time zone in which a large amount of hot water is used.

Furthermore, the operation schedule for which a load prediction is performed and that is generated (changed) by the heat storage system control device 10 of the heat storage system 100 is a schedule for at least a day, for example. With this schedule, a plurality of power supply tightness time zones occurring in a day can be avoided in each area. In addition, because the heat storage system control device 10 sets the heat storage device 20 with more specific time zones to control a heat storage operation, the heat storage device 20 can perform an efficient operation.

Moreover, because the heat storage system control device 10 of the heat storage system 100 is configured to provide, in advance, the outside with an operation schedule that is adjusted based on the information from the power control instruction device 30, the power control instruction device 30 can develop more countermeasures. Thus, by adjusting an operation schedule by the heat storage system control device 10 and transmitting the adjusted operation schedule to the power control instruction device 30, the flexibility of supply-demand control adjustment can be increased for the devices that the power control instruction device 30 manages. In addition, because the heat storage system control device 10 controls the heat storage device 20 not to operate in a time zone in which power supply tightness is substantially high but to perform a heat storage operation in a time zone in which power supply is sufficient, this control can contribute to the power supply-demand adjustment performed by the power control instruction device 30.

### (Modification)

The heat storage system control device 10 of the heat storage system 100 may be a single terminal or may be the controller 21 built in a specific heat storage device 20. In addition, the heat storage system control device 10 may be a virtual controller that is executed by a program on the cloud. As the heat storage system control device 10, the functions to be implemented by the heat storage system control device 10 may be distributed on different devices connected by a network, such as a server, a heat storage device, and a power control instruction device, and each of the functions of the heat storage system control device 10 may be implemented through transmission and reception of necessary information among the devices.

### Embodiment 2

The heat storage system 100 according to Embodiment 2 will be described. Embodiment 2 describes processing in which, after the operation schedule generation or change according to Embodiment 1, the heat storage system control device 10 acquires again power supply and demand information from the power control instruction device 30 and changes the operation schedule of the heat storage device 20. Note that, in Embodiment 2, elements that are the same as or similar to those of Embodiment 1 will be denoted by the same reference signs, and their detailed descriptions will be omitted. In Embodiment 2, a description will be given mainly of changes from Embodiment 1.

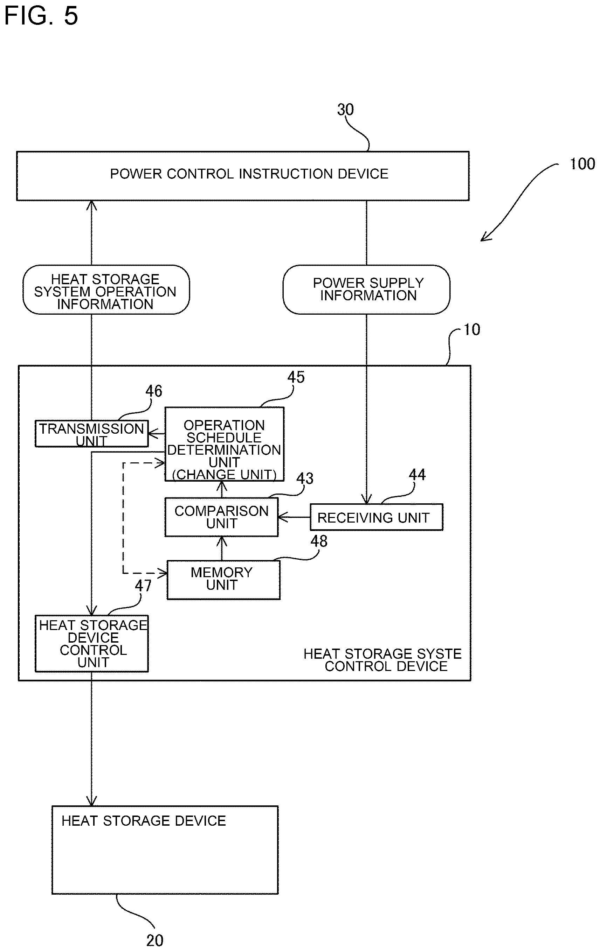

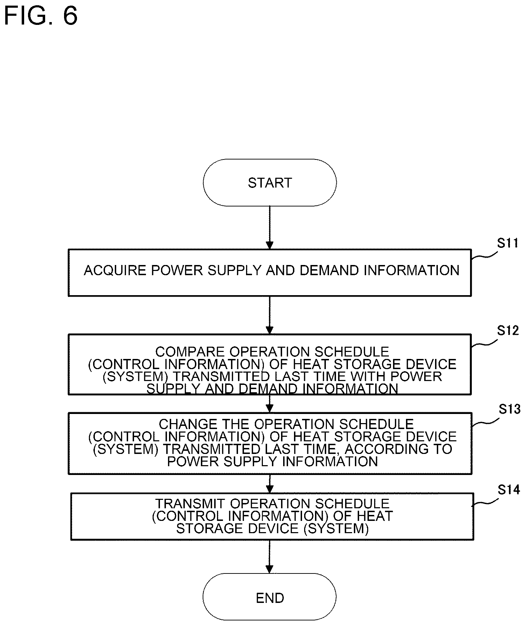

Fig. 5 is a functional block diagram of the heat storage system 100 according to Embodiment 2. Fig. 6 is a flowchart regarding control of the heat storage device 20 and transmission of an operation schedule to the power control instruction device 30 by the heat storage system 100 according to Embodiment 2. In Embodiment 2, the heat storage system control device 10 generates an operation schedule based on power supply and demand information once, and thus the operation schedule of the heat storage device 20 is supposed to match with the supply and demand of power. However, when the adjustment of power supply and demand turns out to be insufficient, there is a case where the power control instruction device 30 provides again power supply and demand information to the heat storage system control device 10. The heat storage system control device 10 is configured to generate or change the operation schedule according to the power supply and demand information provided again.

In step S11 shown in Fig. 6, a receiving unit 44 of the heat storage system control device 10 in heat storage system 100 receives power supply and demand information from the power control instruction device 30. This step S11 is called a re-receiving step. In addition, the receiving unit 44 is also referred to as a re-receiving unit. This power supply and demand information is basically re-acquired power supply and demand information that is newly acquired from the power control instruction device 30 after the operation schedule determined in step S03 of Fig. 3 is transmitted to the power control instruction device 30 as described in Embodiment 1. The re-acquired power supply and demand information is power supply and demand information in which the operation schedule determined in step S03 of Fig. 3 received by the power control instruction device 30 has been adjusted including power supply and demand of other devices that the power control instruction device 30 manages.

The information acquired by the receiving unit 44 from the power control instruction device 30 is represented as, for example, ranking with two power supply tightness levels, high and low, in each time zone. However, the information acquired by the receiving unit 44 is not limited to this information configuration, and may be data on, for example, a power demand amount and a power supply amount for each time zone described in Embodiment 1.

Next, in step S12, the heat storage system control device 10 of the heat storage system 100 compares the re-acquired power supply and demand information from the power control instruction device 30 with the operation schedule of the heat storage device 20 generated last time. This step S12 is called a comparison step. First, the comparison unit 43 determines a high tightness time zone, in which the power supply is tight, in the re-acquired power supply and demand information. The operation schedule generated last time is stored in the memory unit 48, and the comparison unit 43 compares the operation schedule with the re-acquired power supply and demand information acquired by the receiving unit 44. For example, the comparison unit 43 determines whether the power usage amount of the heat storage device 20 in the high tightness time zone, in which the tightness level of power supply is high, in the power supply and demand information is greater or less than a predetermined threshold. When, in the operation schedule, the power usage amount in the high tightness time zone is greater than or equal to the threshold, the operation schedule can be subject to change. That is, the comparison unit 43 determines that the power usage amount of the time zone needs to be reduced.

Furthermore, the comparison unit 43 may determine an off-peak time zone in which the degree of power supply tightness is low in the re-acquired power supply and demand information. The operation schedule generated last time is stored in the memory unit 48, and the comparison unit 43 compares the operation schedule with the re-acquired power supply and demand information acquired by the receiving unit 44. For example, the comparison unit 43 determines whether the power usage amount of the heat storage device 20 in the off-peak time zone, in which the tightness level of power supply is low, in the power supply and demand information is greater or less than a predetermined threshold. When the power usage amount in the off-peak time zone is less than or equal to the threshold, the operation schedule can be subject to change. That is, the comparison unit 43 determines that the power usage amount can be increased in the time zone.

Next, in step S13, the heat storage system control device 10 of the heat storage system 100 determines or changes the operation schedule based on the comparison result in comparison unit 43. This step S13 is called an operation schedule change step. For example, the operation schedule determination unit 45 changes the operation schedule to reduce the power usage amount of a time zone for which the comparison unit 43 determines that the time zone corresponds to the predetermined condition. Note that, when the power usage amount of a specific time zone is changed, it is preferred that the amount of heat to be stored in a predetermined period (e.g., a day) after the change be substantially equal to or greater than that before the change.

Next, in step S14, the heat storage system control device 10 of the heat storage system 100 transmits information on the changed operation schedule to the power control instruction device 30 and the heat storage device 20. This step S14 is called a transmission step. An operation schedule determined or changed by the operation schedule determination unit 45 is transmitted to the transmission unit 46 and the heat storage device control unit 47. The transmission unit 46 transmits the changed operation schedule to the power control instruction device 30. The heat storage device control unit 47 transmits, as control information, the changed operation schedule to the heat storage device 20. The control information transmitted to the heat storage device 20 is processed by the controller 21 of the heat storage device 20, and the operation of the heat storage device 20 is controlled.

### (Advantageous Effects of Embodiment 2)

When power usage during peak hours is reduced based on the power supply and demand information from the power control instruction device 30 as in a conventional case, reduction in power usage during peak hours is uniformly performed by devices including other controllers connected to the power control instruction device 30. In that case, there is a problem that a supply and demand relationship of the power usage and power supply in the power control instruction device 30 has only two states. The first state is that the demand excessively falls below the supply when the supply and demand relationship is established, and the second one is that the supply and demand relationship is failed for other cases. However, in the heat storage system 100 according to Embodiment 2, because the heat storage system control device 10 changes the operation schedule of the heat storage device 20 based on, for example, the power supply and demand information from the power control instruction device 30, the power usage of the heat storage device 20 connected to the heat storage system control device 10 can be adjusted according to establishment or failure of the power supply and demand adjustment in the power control instruction device 30. Thus, the power usage of the heat storage device 20 can be flexibly controlled according to the power supply and demand adjustment of the power control instruction device 30, and thus this control can contribute to adjustment of the entire power supply and demand including other devices connected to the power control instruction device 30.

Furthermore, because a time zone in which power reduction is possible and a time zone in which power supply is indispensable are fixed for a device other than the heat storage device 20, the power usage amount for the device cannot be changed even when power supply and demand information is received from the power control instruction device 30. However, the heat storage system control device 10 according to Embodiment 2 acquires re-acquired power supply and demand information, which is obtained by the power control instruction device 30 from data collected once, and changes the operation schedule again based on that information. The heat storage device 20 controlled according to the changed operation schedule can be operated efficiently by avoiding a time zone in which power supply is tight while keeping a necessary heat storage amount. In addition, the heat storage system control device 10 controls the operation of the heat storage device 20 while corresponding to the power supply and demand of all devices connected to the power control instruction device 30, and thus can contribute to elimination of a tight power supply situation.

### Embodiment 3

The heat storage system 100 according to Embodiment 3 will be described. The heat storage system 100 according to Embodiment 3 is configured to perform the generation or change of an operation schedule according to Embodiment 1 or 2, but there are more than one heat storage device 20 to be controlled. Note that, in Embodiment 3, elements that are the same as or similar to those of Embodiment 1 or 2 will be denoted by the same reference signs, and their detailed descriptions will be omitted. In Embodiment 3, a description will be given mainly of changes from Embodiment 1 or 2.

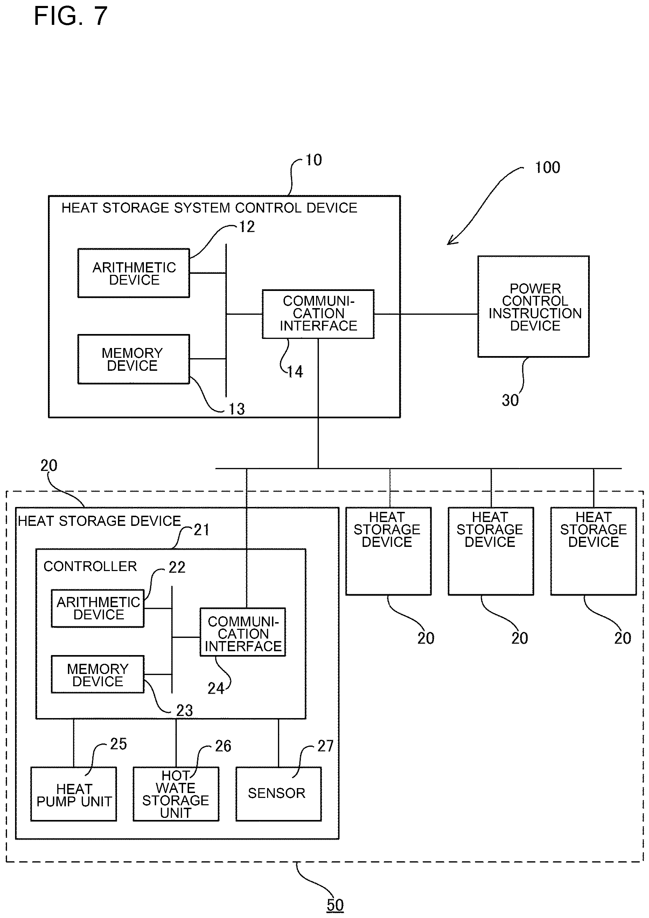

Fig. 7 is a hardware configuration diagram illustrating an example of the configuration of the heat storage system 100 according to Embodiment 3. In the heat storage system 100 according to Embodiment 3, a plurality of heat storage devices 20 are connected to the heat storage system control device 10. The heat storage system control device 10 is configured to predict a load, as a whole, for the plurality of heat storage devices 20 and control operations of the heat storage devices 20 based on the operation information of the heat storage devices 20.

In Fig. 7, the heat storage system control device 10 according to Embodiment 3 is connected to a plurality of heat storage devices 20. However, the configuration is not limited to the configuration in which a plurality of heat storage devices 20 are connected in parallel under the heat storage system control device 10, and a configuration in which, for example, one or more heat storage devices 20 are provided as a master unit or master units and another or other heat storage devices 20 are connected under the master unit(s) may be used. In this case, the heat storage system control device 10 may be installed in a master unit. Then, the heat storage system control device 10 in the master unit is configured to control the operation of the master unit and control the operation of another heat storage device 20 as a slave unit.

The plurality of heat storage devices 20 may include respective controllers 21 or may be configured to be controlled by the heat storage system control device 10.

Because the heat storage system control device 10 according to Embodiment 3 is provided as a specific terminal independent from the plurality of heat storage devices 20, management of information of each heat storage device 20, information from the power control instruction device 30, and stored data can be facilitated, and a risk of leakage of the information to a third party can be reduced. These effects can be obtained also in a case where the heat storage system control device 10 is installed in a specific heat storage device 20 and in a case where the heat storage system control device 10 is provided on the cloud.

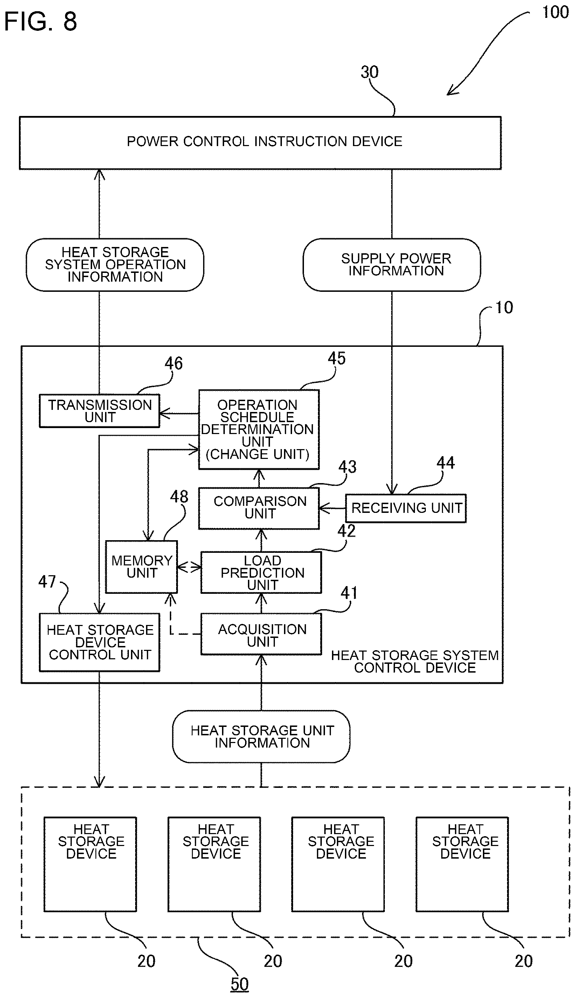

Fig. 8 is a functional block diagram illustrating an example of the configuration of the heat storage system 100 according to Embodiment 3. Also in the heat storage system 100 according to Embodiment 3, generation or change of an operation schedule of the heat storage device 20 is performed according to the flowchart illustrated in Fig. 3. However, because the heat storage system control device 10 is connected to a plurality of heat storage devices 20 in Embodiment 3, generation or change of the operation schedule is performed as follows.

First, a first method is a method in which the heat storage system 100 performs a load prediction, comparison with the power supply and demand information, and generation of an operation schedule for each of the plurality of heat storage devices 20. In this case, a load prediction is performed based on the operation history of each of the heat storage devices 20, and an operation schedule is generated after the load prediction is compared with the power supply and demand information. Then, the heat storage system control device 10 returns the generated operation schedules and information on power consumption by time zone of the heat storage devices 20 to the power control instruction device 30. Thus, a processing load of the heat storage system control device 10 is increased but a flexible operation control for each heat storage device 20 can be performed. In addition, because prediction results for power usage of the plurality of heat storage devices 20 connected to a single heat storage system control device 10 are held in the heat storage system control device 10, the operation control of each heat storage device 20 can be adjusted while the sum of the power usage amounts of the heat storage devices 20 in each time zone is controlled not to deviate too far. With this technique, because the operation of each of the heat storage devices 20 connected to the heat storage system control device 10 is suitably controlled for the power supply and demand information from the power control instruction device 30, the heat storage system control device 10 can contribute to the supply and demand adjustment of all devices connected to the power control instruction device 30.

A second method is a method in which he heat storage system 100 performs a load prediction, comparison with the power supply and demand information, and generation of an operation schedule for a heat storage device 20 provided as a master unit among a plurality of heat storage devices 20, and uses the operation schedule of the master unit for other heat storage devices 20 provided as slave units. Then, the heat storage system control device 10 returns the generated operation schedule and information on power consumption per time zone of the heat storage devices 20 to the power control instruction device 30. In this case, a load prediction is performed based on, for example, the operation information and the operation history of only the master unit among the heat storage devices 20. Then, an operation schedule of the master unit is generated or changed based on the prediction result obtained by the load prediction unit 42 and the power supply and demand information acquired by the receiving unit 44. The operation schedule of the master unit generated by the operation schedule determination unit 45 is transmitted to the power control instruction device 30 from the transmission unit 46. In addition, the operation schedule of the master unit is transmitted, as an operation control signal for the master unit, to the master unit by the heat storage device control unit 47. For a slave unit, a control signal is transmitted to the slave unit directly from the master unit or the heat storage device control unit 47, and the slave unit is operated with the same control as the master unit.

As described above, when a load prediction is performed for the master unit on behalf of a plurality of heat storage devices 20 to generate an operation schedule, the load of the heat storage system control device 10 is reduced compared with a case where a load prediction is performed for each of the heat storage devices 20. In addition, by handling a plurality of devices together, the heat storage system control device 10 can perform an efficient operation for a plurality of heat storage devices 20. Note that, when a load prediction is performed for the master unit on behalf of a plurality of heat storage devices 20 to generate an operation schedule, there is no need to use the same control as the master unit for all slave units. For example, the power usage can be flexibly controlled by adjusting the number of slave units to be operated or the number of slave units using the same control as the master unit according to the power supply and demand information from the power control instruction device 30. In this case, some of the slave units are operated with the same operation control as the master unit and other slave units are operate with an operation control different from the master unit.

As described above, because the first method and the second method are available, as examples, for the operation of the heat storage system 100 and either method allows the heat storage system 100 to collectively manage the power usage amounts of a plurality of heat storage devices 20, the power demand can be flexibly adjusted according to the power supply and demand information from the power control instruction device 30.

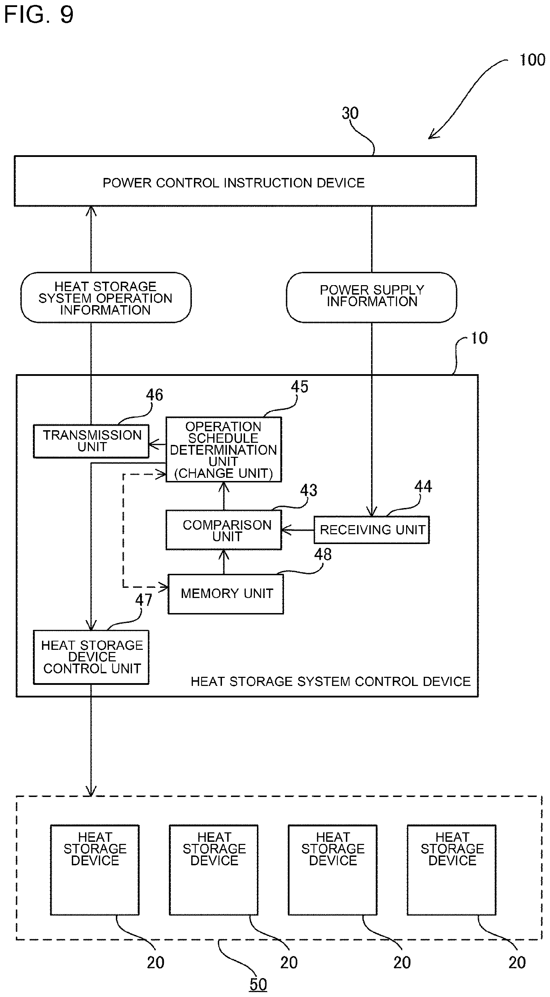

Fig. 9 is a functional block diagram illustrating an example of the configuration of the heat storage system 100 according to Embodiment 3. Also in the heat storage system 100 according to Embodiment 3, generation or change of an operation schedule of the heat storage device 20 is performed according to the power supply and demand information provided again from the power control instruction device 30 according to the flowchart illustrated in Fig. 5.

When the flowchart shown in Fig. 5 is performed, the heat storage system 100 generates an operation schedule by using the first method or the second method. However, if information on power supply tightness levels by time zone is acquired when the power supply and demand information is provided again from the power control instruction device 30, the heat storage system 100 can adjust the demand by changing operation of some of a plurality of heat storage devices 20, and thus more flexible demand adjustment can be performed.

For example, when a time zone in which a power demand higher than a predetermined power value is present in the power supply and demand information, power usage amounts of some of a plurality of heat storage devices 20 are reduced for that time zone. In addition, when a time zone in which a power demand lower than a predetermined power value is present in the power supply and demand information, power usage amounts of the heat storage devices 20 are increased. When changing the operation schedules, the operation schedule of each of the heat storage devices 20 is changed so that the sum of the power usage amounts of the heat storage device 20 in a predetermined period is kept the same before and after the change.

Although, for the heat storage system 100 and the heat storage system control device 10 described in Embodiments 1 to 3, the present disclosure is described above based on the embodiments, the present disclosure is not limited to the configurations of the abovementioned embodiments. For example, one of the embodiments may be combined with another. In short, it should be noted for confirmation that various changes, applications, use ranges that are made as needed by a so-called person skilled in the art are also included in the subject matters (technical scope) of the present disclosure. Furthermore, by installing, on a computer, control programs for executing the contents described in Embodiments 1 to 3, the computer can be operated as the heat storage system 100 to execute each of the functions.

### Reference Signs List

10: heat storage system control device, 12: arithmetic device, 13: memory device, 14: communication interface, 20: heat storage device, 21: controller, 22: arithmetic device, 23: memory device, 24: communication interface, 25: heat pump unit, 26: hot water storage unit, 27: sensor, 30: power control instruction device, 41: acquisition unit, 42: load prediction unit, 43: comparison unit, 44: receiving unit, 45: operation schedule determination unit, 46: transmission unit, 47: heat storage device control unit, 48: memory unit, 100: heat storage system

## Claims

1. A heat storage system control device comprising:
a receiving unit configured to acquire power supply and demand information from a power control instruction device;
an operation schedule determination unit configured to determine an operation schedule of a heat storage device based on the power supply and demand information;
a transmission unit configured to transmit the operation schedule determined by the operation schedule determination unit to the power control instruction device; and
a heat storage device control unit configured to control an operation of the heat storage device based on the operation schedule determined by the operation schedule determination unit.

2. The heat storage system control device of claim 1, wherein
the transmission unit is configured to transmit an amount of power to be consumed in the operation schedule determined by the operation schedule determination unit to the power control instruction device.

3. The heat storage system control device of claim 1 or 2, further comprising:
a comparison unit configured to compare a load prediction of the heat storage device with the power supply and demand information.

4. The heat storage system control device of claim 3, wherein
the comparison unit is configured to determine a tight time zone in which a power supply is tight in the power supply and demand information, and
the operation schedule determination unit is configured to determine an operation schedule so that a power usage amount of the heat storage device in the tight time zone is reduced to equal to or less than a threshold.

5. The heat storage system control device of claim 3 or 4, wherein
the comparison unit is configured to determine an off-peak time zone in which a power demand is small in the power supply and demand information, and
the operation schedule determination unit is configured to determine an operation schedule so that a power usage amount of the heat storage device in the off-peak time zone is increased to equal to or greater than a threshold.

6. The heat storage system control device of claim 4 or 5, wherein
the operation schedule determination unit is configured to determine an operation schedule so that a sum of heat storage amounts of the heat storage device becomes equal to or greater than a sum of the heat storage amounts of the operation schedule before change.

7. The heat storage system control device of any one of claims 3 to 6, wherein
the comparison unit is configured to classify re-acquired power supply and demand information newly acquired from the power control instruction device by the receiving unit after the transmission unit transmits an operation schedule to the power control instruction device, into a high tightness time zone in which a degree of power supply tightness is high and another time zone, and
the operation schedule determination unit is configured to change the operation schedule transmitted to the power control instruction device by the transmission unit so that a power usage amount of the heat storage device in the high tightness time zone is reduced and a power usage amount of the heat storage device in the another time zone is increased.

8. The heat storage system control device of any one of claims 3 to 7, further comprising:
a load prediction unit configured to perform a load prediction for the heat storage device from at least an operation history of the heat storage device and operation setting information of a user.

9. The heat storage system control device of any one of claims 1 to 8, wherein
the heat storage system control device is provided in the heat storage device.

10. A heat storage system for controlling a heat storage device based on power supply and demand information, the heat storage system comprising:
a generation unit configured to generate the power supply and demand information;
an operation schedule determination unit configured to determine an operation schedule of the heat storage device based on the power supply and demand information; and
a heat storage device control unit configured to control an operation of the heat storage device based on the operation schedule determined by the operation schedule determination unit.

11. The heat storage system of claim 10, further comprising:
a heat storage system control device configured to control the heat storage device; and
a power control instruction device configured to provide the power supply and demand information to the heat storage system control device,
wherein the heat storage system control device includes
the operation schedule determination unit,
a receiving unit configured to acquire the power supply and demand information from the power control instruction device,
a transmission unit configured to transmit the operation schedule determined by the operation schedule determination unit to the power control instruction device, and
the heat storage device control unit configured to control the heat storage device.

12. The heat storage system of claim 11, wherein
the transmission unit is configured to transmit an amount of power to be consumed in the operation schedule determined by the operation schedule determination unit to the power control instruction device.

13. The heat storage system of claim 11 or 12, wherein
the power control instruction device is configured to transmit, as the power supply and demand information, information on an electricity rate per unit of electric energy for each time zone to the heat storage device control unit.

14. The heat storage system of claim 13, wherein
the power control instruction device is configured to set a high electricity rate for a time zone in which a power supply is tight.

15. The heat storage system of any one of claims 11 to 14, wherein
the heat storage system control device further includes a comparison unit configured to compare a load prediction of the heat storage device with the power supply and demand information.

16. The heat storage system of claim 15, wherein
the comparison unit is configured to determine a tight time zone in which a power supply is tight in the power supply and demand information, and
the operation schedule determination unit is configured to determine an operation schedule so that a power usage amount of the heat storage device in the tight time zone is reduced to equal to or less than a threshold.

17. The heat storage system of claim 16, wherein
the comparison unit is configured to determine an off-peak time zone in which a power demand is small in the power supply and demand information, and
the operation schedule determination unit is configured to determine an operation schedule so that a power usage amount of the heat storage device in the off-peak time zone is increased to equal to or greater than a threshold.

18. The heat storage system of claim 15 or 16, wherein
the operation schedule determination unit is configured to determine an operation schedule so that a sum of heat storage amounts of the heat storage device becomes equal to or greater than a sum of the heat storage amounts of the operation schedule before change.

19. The heat storage system of any one of claims 16 to 18, wherein
the comparison unit is configured to classify re-acquired power supply and demand information newly acquired from the power control instruction device by the receiving unit after the transmission unit transmits an operation schedule to the power control instruction device, into a high tightness time zone in which a degree of power supply tightness is high and another time zone, and
the operation schedule determination unit is configured to change the operation schedule transmitted to the power control instruction device by the transmission unit so that a power usage amount of the heat storage device in the high tightness time zone is reduced and a power usage amount of the heat storage device in the another time zone is increased.

20. The heat storage system of any one of claims 15 to 19, wherein
the heat storage system control device further includes a load prediction unit configured to perform a load prediction for the heat storage device from at least an operation history of the heat storage device and operation setting information of a user.

21. The heat storage system of any one of claims 11 to 20, wherein
the heat storage system control device is provided in the heat storage device.

22. The heat storage system of any one of claims 10 to 21, wherein
the heat storage device includes a plurality of heat storage devices, and
at least some of the plurality of heat storage devices are operated with a different operation schedule.

23. The heat storage system of any one of claims 10 to 21, wherein
the heat storage device includes a plurality of heat storage devices, and
the plurality of heat storage devices are operated with a same operation schedule.

24. A heat storage system control method for controlling an operation of a heat storage device based on power supply and demand information, the heat storage system control method comprising:
determining an operation schedule of the heat storage device based on the power supply and demand information; and
controlling the heat storage device based on the operation schedule.

25. The heat storage system control method of claim 24, further comprising:
transmitting the operation schedule also to a power control instruction device,
wherein the power control instruction device performs a supply and demand adjustment after receiving the operation schedule, and generates re-acquired power supply and demand information.

26. The heat storage system control method of claim 25, wherein
after the transmitting, the operation schedule is changed based on the re-acquired power supply and demand information from the power control instruction device.

27. A control program for causing a computer to function as a heat storage system control device configured to control an operation of a heat storage device, the control program comprising:
a program instruction for causing a computer to function as a receiving unit configured to receive power supply and demand information from a power control instruction device, as a operation schedule determination unit configured to determine an operation schedule of the heat storage device based on the power supply and demand information, and as a transmission unit configured to transmit the operation schedule to the power control instruction device and the heat storage device.

28. The control program of claim 27, further comprising:
a program instruction for causing the computer to function as a re-receiving unit configured to receive re-acquired power supply and demand information, which is power supply and demand information in which a supply and a demand have been adjusted, from the power control instruction device after the transmission of the operation schedule, and as an operation schedule change unit configured to change the operation schedule of the heat storage device based on the re-acquired power supply and demand information.

29. A recording medium, comprising:
a computer readable recording medium storing the control program of claim 27 or 28.
